# EUROPÄISCHE PATENTSCHRIFT

(11) **EP 0 445 610 B1**
(45) Veröffentlichungstag und Bekanntmachung des Hinweises auf die Patenterteilung: **04.05.1994**
(21) Anmeldenummer: 91102680.5
(22) Anmeldetag: 23.02.1991
(51) Int. Cl.: C10M 105/00, C10M 105/42, C09K 5/04

(54) **Verwendung von komplexen Esterölen als Schmiermittel für Kältemittelverdichter**
Use of complex ester oils as lubricant for refrigerant compressor
Utilisation d'huiles d'esters complexes comme lubrifiants pour compresseur de réfrigérant

(30) Priorität: 05.03.1990 DE 4006828
(43) Veröffentlichungstag der Anmeldung: 11.09.1991
(73) Patentinhaber: HOECHST AKTIENGESELLSCHAFT, 65926 Frankfurt am Main (DE)
(72) Erfinder: Cornils, Boy, Prof. Dr. Dipl.-Chem., W-6238 Hofheim (DE); Weber, Jürgen, Dr. Dipl.-Chem., W-4200 Oberhausen 11 (DE); Lappe, Peter, Dr. Dipl.-Chem., W-4220 Dinslaken (DE); Springer, Helmut, Dipl.-Ing., W-4200 Oberhausen 11 (DE); Preisegger, Ewald, Dipl.-Ing., W-6085 Nauheim (DE); Henrici, Rainer, Dipl.-Ing., W-6392 Neu-Anspach (DE)

(56) Entgegenhaltungen:
- EP-A- 0 218 207
- EP-A- 0 406 479
- WO-A-90/12849
- GB-A- 1 460 665
- GB-A- 2 216 541
- US-A- 4 155 861
- US-A- 4 851 144
- DATABASE WPIL, accession no. 87-267230 [43], Derwent Publications Ltd, Londen, GB; & JP-A-59 164 393 (NIPPON OILS) 17-09-1984
- DATABASE WPIL, accession no. 86-242514, Derwent Publications Ltd, London, GB; & JP-A-61 171 799 (NIPPON OILS) 02-08-1986

## Beschreibung

Die Erfindung betrifft die Verwendung von komplexen Esterölen als Schmiermittel für Kältemittelverdichter, die mit chlorfreien, teilfluorierten Kohlenwasserstoffen als Kältemittel betrieben werden.

Zur Kälteerzeugung im industriellen, gewerblichen wie auch im privaten Bereich werden in großem Umfang Kältemittelverdichter eingesetzt. Diese Vorrichtungen arbeiten mit mechanischen Verdichtern, die das Kältemittel komprimieren, im Verflüssiger durch Kühlen mit Luft, Wasser oder einem anderen Medium verflüssigen und im Verdampfer unter Wärmeaufnahme aus dem zu kühlenden Medium verdampfen. Als Kältemittel werden vorwiegend Ammoniak für Großanlagen und Fluorchlorkohlenwasserstoffe wie Dichlordifluormethan, Chlortrifluormethan für Großanlagen, gewerbliche Kälteanlagen und für Haushaltsgeräte eingesetzt.

Zur Schmierung von Kältemittelverdichtern verwendet man hochraffinierte, weißölähnliche, im allgemeinen naphthenbasische Mineralöle. Als vollsynthetische Öle für Kältemittelverdichter gelangen Alkylaromaten und daneben auch Polyalpha-olefine zum Einsatz.

Aufgabe der Schmieröle ist es, die beweglichen Verdichterteile zu schmieren, die Wärme von den heißen Verdichterteilen abzuführen und den Kompressionsraum sowie die Ventile abzudichten. Diese Aufgaben bestimmen auch die Eigenschaften, denen die Schmieröle genügen müssen. Sie müssen thermischen Belastungen gewachsen sein und auch bei den Temperaturen des Verdampfers fließfähig bleiben. Überdies ist zu berücksichtigen, daß die Schmieröle aus dem Kompressionsraum in den Kältemittelkreislauf ausgetragen werden und durch nachgeschaltete Ölabscheider nicht vollständig entfernt werden können. Sie müssen daher mit dem Kältemittel in weiten Temperatur- und Konzentrationsbereichen mischbar sein, so daß die Rückführung von Schmieröl, das in den Kältemittelkreislauf gelangt ist, in den Verdichter sichergestellt wird.

Fluorchlorkohlenwasserstoffe stehen seit einiger Zeit im Verdacht, die Ozonschicht der Erdatmosphäre zu schädigen. Daher ist man bestrebt, ihre Verwendung auf solche Fälle zu beschränken, in denen sie nicht ausgetauscht werden können. Im übrigen versucht man, sie durch gleichwirkende, jedoch unschädliche Stoffe zu ersetzen. Auf dem Gebiet der Kältemittel für Kälteanlagen werden zukünftig chlorfreie, teilfluorierte Kohlenwasserstoffe wie 1,1,1,2-Tetrafluorethan, 1,1,1,2,3,3,3-Heptafluorpropan, Pentafluorethan, 1,1,1,3,3,3-Hexafluorpropan und Trifluormethan eingesetzt werden. Diese Stoffe zeichnen sich durch hohe thermische Stabilität und entsprechende thermodynamische Eigenschaften in den Temperaturbereichen aus, die beim Betrieb von Kältemittelverdichter auftreten.

Nachteilig ist jedoch, daß diese chlorfreien, aliphatischen Fluorkohlenwasserstoffe nur sehr geringe Mischbarkeit mit den bisher verwendeten Schmiermitteln für Kälteanlagen aufweisen. In weiten Konzentrationsbereichen bilden die beiden Substanzklassen ein Zweiphasengemisch mit dem Ergebnis, daß die Rückführung des aus dem Verdichter ausgetragenen Schmiermittels vor allem bei tiefen Verdampfungstemperaturen erheblich behindert wird. Die bekannten Schmiermittel sind daher in Anlagen mit chlorfreien Kältemittel-Substituten im allgemeinen nicht mehr verwendbar.

Man hat versucht, diese Schwierigkeiten durch Einsatz von Schmiermitteln auf Basis von Polyalkylenglykolen zu umgehen. Die meisten Polyalkylenglykol-Typen sind zwischen -40 und +50°C mit den genannten chlorfreien Kältemitteln vollständig mischbar. Erst bei Temperaturen oberhalb etwa 50°C treten Mischungslücken auf, die sich zu höheren Temperaturen hin auf einen großen Konzentrationsbereich ausweiten.

Dennoch ist zu erwarten, daß Polyalkylenglykole nur begrenzt als Schmiermittel eingesetzt werden können, weil sie stark hygroskopisch sind. Ihre Trocknung auf eine Restfeuchte von <100 ppm erfordert einen hohen Aufwand. Darüberhinaus ist durch völligen Luftabschluß dafür Sorge zu tragen, daß eine erneute Feuchtigkeitsaufnahme vermieden wird. Sie können daher nur in hermetisch geschlossenen, kleinen Kältesystemen, z.B. Haushaltskühlgeräten, verwendet werden. In großen Kälteanlagen, bei denen Wartungsarbeiten mit gelegentlichen Eingriffen in den Kältemittelkreislauf erforderlich sind, ist im Laufe der Zeit mit einer erheblichen Feuchtigkeitsaufnahme zu rechnen. Die an das Polyalkylenglykol gebundene Feuchtigkeit läßt sich auch mit Hilfe von Filtertrocknern nicht mehr entfernen. Probleme mit metallischen Werkstoffen im System sind daher die Folge. Überdies genügt die thermische Stabilität der Polyalkylenglykole nicht allen Anforderungen. Schon oberhalb etwa 180°C, eine solche Temperatur kann bei extremen Betriebsbedingungen im Druckventil des Verdichters auftreten, beginnen sie sich zu zersetzen.

Auch Ester aus Monocarbonsäuren oder Dicarbonsäuren und einwertigen Alkoholen oder aus Monocarbonsäuren und mehrwertigen Alkoholen wurden als Schmiermittel für Kältemittelverdichter beschrieben, die mit chlorfreien Fluorkohlenwasserstoffen als Kältemittel arbeiten (vgl. US-A-4 851 144, GB-A-2 216 541). Da es sich bei diesen Estern um individuelle Verbindungen handelt, sind ihre für den Einsatz als Schmiermittel geforderten Eigenschaften für jeden Einzelfall nur durch Variation der Reaktionspartner zu ändern.

Statt mehrwertige Alkohole mit einer Monocarbonsäure umzusetzen, kann man sie auch mit einem Gemisch aus einer Dicarbonsäure und einer Monocarbonsäure verestern. Aus der JP-A-59 164 393 ist es bekannt, derartige Ester als Schmiermittel zu verwenden, wenn mit Freon, einem Fluorchlorkohlenwasserstoff, als Kältemittel gearbeitet wird. Eine entsprechende Herstellungsvorschrift ist auch in der WO-90/12 849, Beispiel 20, wiedergegeben, ohne daß auf die Eignung des erhaltenen Esters als Schmiermittel näher eingegangen wird. Wie die vorstehend beschriebenen Ester lassen sich die Eigenschaften der aus einem mehrwertigen Alkohol und dem Gemisch einer Mono- und einer Dicarbonsäure synthetisierten Schmiermittel nur begrenzt dem jeweiligen Schmierproblem anpassen. Hierbei ist zu berücksichtigen, daß es sich bei ihnen um uneinheitliche Gemische aus polymeren Verbindungen, entstanden aus Polyol und Dicarbonsäure und niedermolekularen Estern aus der Reaktion von Polyol mit der Monocarbonsäure handelt.

Es bestand daher die Aufgabe Schmiermittel für Kältemittelverdichter bereitzustellen, die frei von den beschriebenen Mängeln bekannter Schmiermittel sind und die immer dann eingesetzt werden können, wenn chlorfreie, teilfluorierte Kohlenwasserstoffe als Kältemittel Anwendung finden.

Die Erfindung besteht somit in der Verwendung von Estern, die aus einer Dicarbonsäure durch Teilveresterung einer unterstöchiometrischen Menge eines Glykols oder Polyglykols sowie durch Vervollständigung der Veresterung der Säure mit der erforderlichen Menge eines Monoalkohols erhalten wurden oder aus einem Glykol oder Polyglykol durch Teilveresterung einer unterstöchiometrischen Menge einer Dicarbonsäure sowie durch Vervollständigung der Veresterung des Glykols oder Polyglykols mit der erforderlichen Menge einer Monocarbonsäure erhalten wurden, als Schmiermittel für Kältemittelverichter, die mit chlorfreien, teilfluorierten Kohlenwasserstoffen als Kältemittel betrieben werden.

Carbonsäureester, die sich von Dicarbonsäuren und Glykolen oder Polyglykolen und Monocarbonsäuren oder Monoalkoholen ableiten, werden in großem Umfang zur Schmierung von Automotoren und Getrieben eingesetzt. Für sie hat sich die Bezeichnung komplexe Esteröle eingebürgert. Das für die genannte Anwendung von den Ölen verlangte Eigenschaftsbild unterscheidet sich jedoch grundlegend von den Merkmalen, die Schmiermittel für Kompressionskältemaschinen aufweisen müssen. Es war daher nicht vorhersehbar, daß synthetische Öle, die sich vor allem für die Schmierung von Automotoren und Getrieben bewährt haben, auch auf einem völlig anderen Gebiet der Technik erfolgreich eingesetzt werden können.

Die erfindungsgemäß verwendeten Ester gehen auf geradkettige oder verzweigte, gesättigte Dicarbonsäuren zurück, die insbesondere 4 bis 12 und bevorzugt 6 bis 10 Kohlenstoffatome enthalten. Beispiele für solche Säuren sind Adipinsäure, Pimelinsäure, Suberinsäure, Azelainsäure, Sebacinsäure und 1,12-Dodecandisäure.

Als Alkoholkomponente enthalten die Ester Glykole oder Polyglykole. Beispiele für geeignete Glykole sind Ethylenglykol, Diethylenglykol, Triethylenglykol, Propandiol-1,2, Dipropylenglykol, Tripropylenglykol, Propandiol-1,3, Butandiol-1,3, Butandiol-1,4, Neopentylglykol, Hexandiol-1,6. Bevorzugt werden Polyalkylenglykole (Polyglykole), d.h. Polyether mit Hydroxylendgruppen. Die wichtigsten Vertreter dieser Verbindungsklasse sind die Polyethylenglykole und die Polypropylenglykole. Mit besonderem Erfolg setzt man Polyethylenglykole der allgemeinen Formel HO(CH₂-CH₂O)ₙH mit n = 2 bis 6 ein. Die Polyglykole können als einheitliche Verbindungen oder als Gemisch verschiedener Glykole, z.B. Polyethylenglykole unterschiedlicher Molmassen zur Anwendung gelangen.

Um die Molmassen und damit die Viskosität der Esteröle auf bestimmte Werte einzustellen, muß man dafür sorgen, daß die Reaktion zwischen den Dicarbonsäuren und den Diolen nicht unkontrolliert abläuft, sondern im geeigneten Augenblick unterbrochen wird. Dieses Ziel erreicht man dadurch, daß man einen der beiden Reaktionspartner Diol oder Dicarbonsäure im Unterschuß anwendet und die nichtumgesetzten Carboxylgruppen der Dicarbonsäuren mit Monoalkoholen oder die nichtumgesetzten Hydroxylgruppen der Diole mit Monocarbonsäuren reagieren läßt. Für diese Umsetzungen geeignete Monoalkohole sind 2-Ethylbutanol, 2-Methylpentanol, n-Hexanol, Heptanol (Isomerengemisch), Octanol (Isomerengemisch), 2-Ethylhexanol, n-Octanol, Isononanol, Isodecanol, Isotridecanol, Isohexadecanol, Isooctadecanol. Bevorzugt werden durch Oxosynthese und anschließende Hydrierung erhaltene C₈- bis C₁₃-Alkohole oder Alkoholgemische. Als Monocarbonsäuren haben sich n-Buttersäure, n-Valeriansäure, 2-Methylbuttersäure, 3-Methylbuttersäure, Pivalinsäure, 2-Methylvaleriansäure, 2-Ethylbuttersäure, n-Heptansäure, Isooctansäure, 2-Ethylhexansäure, Isononansäure, Isodecansäure, Isotridecansäure, Palmitinsäure und Stearinsäure bewährt.

Die Herstellung der Ester erfolgt in bekannter Weise aus den vorgenannten Säuren und Alkoholen in Gegenwart saurer Katalysatoren. Als Katalysatoren finden bevorzugt Mineralsäuren wie Schwefelsäure, Phosphorsäure und deren saure Salze, sowie Trialkyl- oder Triarylphosphate und p-Toluolsulfonsäure Anwendung. In der Praxis setzt man die Dicarbonsäure zunächst mit einer unterstöchiometrischen Menge des Diols um und vervollständigt die Veresterung der Säure durch Zugabe der entsprechenden Menge eines Monoalkohols. Es ist aber auch möglich, das Diol in einer ersten Reaktionsstufe mit einer Dicarbonsäure teilweise zu verestern und darauf in einer zweiten Reaktionsstufe durch Zusatz der entsprechenden Menge einer Monocarbonsäure die Reakion zu Ende zu führen. Schließlich kann man auch die Dicarbonsäure zunächst teilweise mit dem Monoalkohol verestern und darauf die Reaktion mit dem Diol vervollständigen oder das Diol partiell mit der Monocarbonsäure umsetzen und die restlichen Hydroxylgruppen mit der Dicarbonsäure zur Reaktion bringen. Die Menge der eingesetzten monofunktionellen Verbindung richtet sich nach der angestrebten Viskosität des komplexen Esteröls und damit nach seiner mittleren Molmasse. Im allgemeinen haben sich komplexe Esteröle bewährt, deren mittlere Molmassen mindestens 300 g/mol betragen.

Die Umsetzung kann zwischen den Reaktionspartnern unmittelbar erfolgen. Häufig empfiehlt es sich jedoch, dem Reaktionsgemisch ein Lösungsmittel wie Toluol, Xylol, Cyclohexan zuzufügen. Besonders bewährt haben sich als Lösungsmittel Toluol und Xylol.

Um eine möglichst quantitative Reaktion zwischen Säure und Alkohol zu erzielen ist es vorteilhaft, das Reaktionswasser abzutrennen. Hierzu eignen sich die bekannten Techniken wie Destillation, insbesondere Destillation unter Zusatz eines Azeotropbildners.

Die erfindungsgemäß verwendeten Schmiermittel besitzen gute Mischbarkeit mit den als Kältemitteln eingesetzten chlorfreien, teilfluorierten Kohlenwasserstoffen auch noch bei -40°C, also in den Temperaturbereichen, die in Kompressionskälteanlagen auftreten können. Ihre Viskosität liegt je nach stofflicher Zusammensetzung und Molmasse, bei 40°C zwischen etwa 10 und 100 mm²/s und entspricht damit den Anforderungen, die an das Schmiermittel für das vorbeschriebene Einsatzgebiet gestellt werden. Das schließt aber nicht aus, auch höher viskose komplexe Esteröle einzusetzen. Ihre Fließfähigkeit kann durch Verschneiden mit niederviskosen Esterölen oder komplexen Esterölen auf den gewünschten Wert eingestellt werden.

Die komplexen Esteröle weisen unter Ausschluß von Luftsauerstoff und Feuchtigkeit, also unter Bedingungen, die in einem Kältemittelkreislauf erfüllt sein müssen, ausgezeichnete thermische Stabilität auf. Sie sind nicht hygroskopisch und können daher ohne großen Aufwand getrocknet werden. Restfeuchten, die nach der deutschen Norm DIN 51 503 35 ppm nicht überschreiten dürfen, lassen sich ohne weiteres erreichen.

In dem folgenden Beispiel wird die Herstellung eines komplexen Esters beschrieben, außerdem werden seine Eigenschaften aufgeführt, soweit sie für die Verwendung des Esters als Schmiermittel bedeutsam sind. Selbstverständlich ist der Umfang der Erfindung nicht auf die geschilderte Ausführungsform beschränkt.

### Beispiel: Herstellung von Diethylenglykol-Adipinsäure-2-Ethylhexansäure-Komplexester

Die Herstellung des Komplexesters erfolgt in zwei Stufen.

In der ersten Stufe wird eine Mischung aus 212 g (2 mol) Diethylenglykol, 146 g (1 mol) Adipinsäure und 100 g Cyclohexan vorgelegt und nach Zugabe von 1,9 g (0,01 mol) p-Toluolsulfonsäure auf 135°C erhitzt. Über einen Zeitraum von 2,5 Stunden wird das anfallende Reaktionswasser als Azeotrop abgetrennt.

Das vom Reaktionswasser befreite Rohprodukt wird in der zweiten Stufe mit 317 g (2,2 mol) 2-Ethylhexansäure sowie zusätzlich mit 0,9 g (0,005 mol) p-Toluolsulfonsäure versetzt und über einen Zeitraum von 7,5 Stunden bei 135°C unter Entfernung des Reaktionswassers als Azeotrop verestert.

Zur Aufarbeitung wird der organischen Phase 5 Gew.-%ige Natronlauge bis zum Erreichen eines pH-Wertes von 10 - 11 zugesetzt. Nach Phasentrennung und Wäsche mit Wasser bis zum Neutralpunkt wird der wasserhaltige Rohester bei einer Temperatur von 135°C und einem Druck von 20 - 30 mbar (2-3 kPa) während 4 Stunden getrocknet. Nach Filtration werden 440 g Produkt erhalten, entsprechend einer Ausbeute von 77 % (bezogen auf Adipinsäure).

### Eigenschaften des im Beispiel beschriebenen Esters

Als Kriterien, die für die Verwendung des vorstehend beschriebenen Esters als Schmiermittel wichtig sind, werden sein thermisches Verhalten, seine Viskosität und seine Mischbarkeit mit Kältemitteln, Prototypen sind 1,1,1,2-Tetrafluorethan und 2 H-Heptafluorpropan, angegeben.

Die Prüfung der thermischen Stabilität des Esters erfolgt in Anlehnung an DIN 51593 in einem U-Rohr bei 250/40°C und 96 h. Der mit Öl gefüllte Schenkel des U-Rohrs wird auf 250°C eingestellt und steht in Kontakt mit der Dampfphase des Kältemittels, das in den zweiten Schenkel einkondensiert und dann auf 40°C eingestellt wird. Die Auswertung erfolgt optisch (Ölverfärbung). Ergänzend wird ein wäßriger ger Auszug der Dampfphase durch eine ionensensitive Elektrode auf Fluoridionen geprüft.

Eine gaschromatografische Analyse der Gasphase gibt Aufschluß über mögliche gasförmige Zersetzungsprodukte des Esters bzw. Kältemittels. Ein Vergleich des Chromatogramms erfolgt mit dem einer Blindprobe.

Die Messung der Viskosität des Esters erfolgt in einem Ubbelohde-Viskosimeter bei 40°C.

Zur Prüfung der Mischbarkeit des Esters mit den Kältemitteln gibt man eine definierte Menge Ester (etwa 0,2 bis 3 g) in ein Glasröhrchen von etwa 10 ml Inhalt. Nach Eintauchen in flüssigen Stickstoff kondensiert man je nach einzustellender Konzentration zwischen 6 und 3 g des Kältemittels dazu. Darauf evakuiert man das Glasröhrchen, verschließt es durch Abschmelzen und durchschreitet mit der Mischung bestimmter Zusammensetzung einen Temperaturbereich von -40°C bis +80°C. Bei Ausbildung zweier Phasen bzw. bei beginnender Trübung kann der Entmischungspunkt, d.h. ein Punkt auf der Grenzkurve des Mischungsdiagramms bestimmt werden. Die Gesamtheit der gefundenen Entmischungspunkte ergeben dann die Grenzkurve der Mischungslücke.
- thermische Stabilität:: Abbauprodukte in geringem Ausmaß nachweisbar
- Viskosität :: ν = 36,5 mm²/s
- Mischbarkeit :: Mischungslücke bei -20°C

## Patentansprüche

1. Verwendung von Estern, die aus einer Dicarbonsäure durch Teilveresterung mit einer unterstöchiometrischen Menge eines Glykols oder Polyglykols sowie durch Vervollständigung der Veresterung der Säure mit der erforderlichen Menge eines Monoalkohols erhalten wurden oder aus einem Glykol oder Polyglykol durch Teilveresterung mit einer unterstöchiometrischen Menge einer Dicarbonsäure sowie durch Vervollständigung der Veresterung des Glykols oder Polyglykols mit der erforderlichen Menge einer Monocarbonsäure erhalten wurden, als Schmiermittel für Kältemittelverdichter, die mit chlorfreien, teilfluorierten Kohlenwasserstoffen als Kältemittel betrieben werden.

2. Verwendung von Estern nach Anspruch 1, dadurch gekennzeichnet, daß sich die Ester von geradkettigen oder verzweigten, gesättigten Dicarbonsäuren, die insbesondere 4 bis 12, vorzugsweise 6 bis 10 Kohlenstoffatome enthalten, ableiten.

3. Verwendung von Estern nach Anspruch 2, dadurch gekennzeichnet, daß sich die Ester von Adipinsäure, Pimelinsäure, Suberinsäure, Azelainsäure, Sebacinsäure oder 1,12-Dodecandisäure ableiten.

4. Verwendung von Estern nach einem oder mehreren der Ansprüche 1 bis 3, dadurch gekennzeichnet, daß sich die Ester von Ethylenglykol, Diethylenglykol, Triethylenglykol, Propandiol-1,2, Propandiol-1,3, Dipropylenglykol, Tripropylenglykol, Butandiol-1,3, Butandiol-1,4, Neopentylglykol oder Hexandiol-1,6 ableiten.

5. Verwendung von Estern nach einem oder mehreren der Ansprüche 1 bis 3, dadurch gekennzeichnet, daß sich die Ester von Polyethylenglykolen oder Polypropylenglykolen ableiten.

6. Verwendung von Estern nach Anspruch 5, dadurch gekennzeichnet, daß sich die Ester von Polyethylenglykolen der allgemeinen Formel HO(CH₂-CH₂O)ₙH mit n = 2 bis 6 ableiten.

7. Verwendung von Estern nach einem oder mehreren der Ansprüche 1 bis 6, dadurch gekennzeichnet, daß die Ester als Monoalkohol einen durch Oxosynthese und anschließende Hydrierung hergestellten Alkohol mit 8 bis 13 Kohlenstoffatomen oder Gemische solcher Alkohole enthalten.

8. Verwendung von Estern nach einem oder mehreren der Ansprüche 1 bis 6, dadurch gekennzeichnet, daß die Ester n-Buttersäure, n-Valeriansäure, 2-Methylbuttersäure, 3-Methylbuttersäure, Pivalinsäure, 2-Methylvaleriansäure, 2-Ethylbuttersäure, n-Heptansäure, Isooctansäure, 2-Ethylhexansäure, Isononansäure, Isodecansäure, Isotridecansäure, Palmitinsäure oder Stearinsäure als Monocarbonsäure enthalten.

## Claims

1. The use of esters prepared from a dicarboxylic acid through partial esterification with a sub-stoichiometric amount of a glycol or polyglycol as well as through completion of the esterification of the acid with the necessary amount of a monoalcohol or prepared from a glycol or polyglycol through partial esterification with a sub-stoichiometric amount of a dicarboxylic acid as well as through completion of the esterification of the glycol or polyglycol with the necessary amount of a monocarboxylic acid as lubricants for refrigeration compressors utilising chlorine-free, partially fluorinated hydrocarbons as refrigerants.

2. The use of esters according to claim 1, characterised in that the esters are derived from straight-chain or branched, saturated dicarboxylic acids containing in particular 4 to 12 carbon atoms and preferably 6 to 10 carbon atoms.

3. The use of esters according to claim 2, characterised in that the esters are derived from adipic acid, pimelic acid, suberic acid, azelaic acid, sebacic acid or 1,12-dodecanedioic acid.

4. The use of esters according to one or more of claims 1 to 3, characterised in that the esters are derived from ethylene glycol, diethylene glycol, triethylene glycol, propanediol-1,2, propanediol-1,3, dipropylene glycol, tripropylene glycol, butanediol-1,3, butanediol-1,4, neopentyl glycol or hexanediol-1,6.

5. The use of esters according to one or more of claims 1 to 3, characterised in that the esters are derived from polyethylene glycols or polypropylene glycols.

6. The use of esters according to claim 5, characterised in that the esters are derived from polyethylene glycols of the general formula HO(CH₂-CH₂O)ₙH where n = 2 to 6.

7. The use of esters according to one or more of claims 1 to 6, characterised in that the esters contain, as a monovalent alcohol, an alcohol having 8 to 13 carbon atoms prepared by Oxo synthesis and subsequent hydrogenation or mixtures of such alcohols.

8. The use of esters according to one or more of claims 1 to 6, characterised in that the esters contain n-butyric acid, n-valeric acid, 2-methylbutyric acid, 3-methylbutyric acid, pivalic acid, 2-methylvaleric acid, 2-ethylbutyric acid, n-heptanoic acid, isooctanoic acid, 2-ethylhexanoic acid, isononanoic acid, isodecanoic acid, isotridecanoic acid, palmitic acid or stearic acid as a monocarboxylic acid.

## Revendications

1. Utilisation d'esters obtenus en estérifiant partiellement un acide dicarboxylique par un défaut d'un glycol ou polyglycol et en complétant l'estérification de l'acide par la quantité nécessaire d'un monoalcool ou bien en estérifiant partiellement un glycol ou polyglycol par un défaut d'un acide dicarboxylique et en complétant l'estérification du glycol ou polyglycol par la quantité nécessaire d'un acide monocarboxylique, en tant que lubrifiants pour des compresseurs de réfrigérants opérant avec des agents réfrigérants qui consistent en hydrocarbures partiellement fluorés mais exempts de chlore.

2. Utilisation d'esters selon la revendication 1, caractérisée en ce que les esters dérivent d'acides dicarboxyliques saturés à chaîne droite ou ramifiée contenant plus spécialement 4 à 12, et de préférence 6 à 10 atomes de carbone.

3. Utilisation d'esters selon la revendication 2, caractérisée en ce que les esters dérivent de l'acide adipique, de l'acide pimélique, de l'acide subérique, de l'acide azélaïque, de l'acide sébacique ou de l'acide 1,12-dodécane-dioïque.

4. Utilisation d'esters selon une ou plusieurs des revendications 1 à 3, caractérisée en ce que les esters dérivent de l'éthylèneglycol, du diéthylèneglycol, du triéthylèneglycol, du propane-diol-1,2, du propane-diol-1,3, du dipropylèneglycol, du tripropylèneglycol, du butane-diol-1,3, du butane-diol-1,4, du glycol néopentylique ou de l'hexane-diol-1,6.

5. Utilisation d'esters selon une ou plusieurs des revendications 1 à 3, caractérisée en ce que les esters dérivent de polyéthylèneglycols ou de polypropylèneglycols.

6. Utilisation d'esters selon la revendication 5, caractérisée en ce que les esters dérivent de polyéthylèneglycols de formule générale HO(CH₂-CH₂O)ₙH dans laquelle n=2 à 6.

7. Utilisation d'esters selon une ou plusieurs des revendications 1 à 6, caractérisée en ce que les esters contiennent en tant que monoalcool un alcool en C₈-C₁₃ préparé par oxosynthèse suivie d'une hydrogénation ou un mélange de tels alcools.

8. Utilisation d'esters selon un ou plusieurs des revendications 1 à 6, caractérisée en ce que ces esters contiennent en tant qu'acide monocarboxylique l'acide butyrique, l'acide n-valérique, l'acide 2-méthylbutyrique, l'acide 3-méthylbutyrique, l'acide pivalique, l'acide 2-méthylvalérique, l'acide 2-éthylbutyrique, l'acide n-heptanoïque, l'acide isooctanoïque, l'acide 2-éthylhexanoïque, l'acide isononanoïque, l'acide isodécanoïque, l'acide isotridécanoïque, l'acide palmitique ou l'acide stéarique.
